# FASCICULE DE BREVET EUROPEEN

(11) **EP 1 498 046 B1**
(45) Date de publication et mention de la délivrance du brevet: **15.04.2009**
(21) Numéro de dépôt: 04291518.1
(22) Date de dépôt: 16.06.2004
(51) Int. Cl.: A46B 9/02, A46D 3/00

(54) **Dispositif applicateur moulé, moule et procédé de moulage d'un tel dispositif, et kit comportant ledit dispositif**
Moulded applying device, mould and moulding process, and kit comprising said device
Gegossene Auftragvorrichtung, Pressform sowie Gussverfahren, und Kit beinhaltend eine solche Auftragsvorrichtung

(30) Priorité: 18.07.2003 FR 0308802
(43) Date de publication de la demande: 19.01.2005
(73) Titulaire: L'ORÉAL, 75008 Paris (FR)
(72) Inventeur: De Laforcade, Vincent, 78120 Rambouillet (FR)
(74) Mandataire: Julio, Charlotte

(56) Documents cités:
- EP-A- 0 463 217
- DE-C- 941 364
- FR-A- 2 744 607
- US-A- 4 504 998
- US-A- 4 860 775
- US-A1- 2001 035 191

## Description

La présente invention a trait à un applicateur pour produit capillaire, notamment sous forme de mousse, de gel, de pâte ou de crème. L'invention est tout particulièrement adaptée à l'application de produits de coloration.

Un des effets les plus recherchés consiste à obtenir dans la chevelure des mèches qui soient plus claires ou plus foncées que le reste de la chevelure, pour nuancer l'ensemble de la chevelure de façon très naturelle. Ces effets sont obtenus à partir de compositions de coloration, sous forme de gel, de pâte, de mousse ou de crème, que l'on dépose sur une brosse et que l'on applique sur la chevelure.

Dans l'état de la technique on connaît, pour l'application en mèches de produits de coloration, l'utilisation de brosses du type des brosses à mascara. Ces brosses sont en particulier prévues dans des kits de coloration pour permettre l'application en mèche du ou des produit(s) contenu(s) dans le kit. Une telle brosse à mascara comporte généralement des poils en nylon pris dans une torsade métallique, elle-même montée en force dans un manche plastique.

Ce type de brosse pose un problème dans la mesure où il comporte trois éléments de matériaux et de formes distincts, ces éléments étant à assembler en au moins deux étapes. Ce type de dispositif est donc coûteux et complexe à mettre en oeuvre. Les brosses à mascara sont d'autant plus coûteuses que la partie métallique utilisée pour réaliser la torsade doit être réalisée dans un matériau compatible avec les produits très réactifs qui sont à appliquer. En particulier on utilise un fil en acier inoxydable pour éviter toute réaction d'oxydo réduction susceptible de parasiter le mélange. Or l'acier inoxydable est entre autre plus cher que l'acier standard.

Dans l'état de la technique on connaît des applicateurs à mascara moins coûteux et notamment obtenus par injection d'un matériau thermoplastique. De l'enseignement du document US-4,422,986, on connaît une brosse à mascara obtenue de moulage, les poils étant orientés perpendiculairement ou à l'oblique par rapport au support de la brosse. Les poils ainsi moulés sont tous rectilignes et rayonnent depuis le pourtour extérieur du support. Dans un cas particulier, ce support est cylindrique et les poils rayonnent de ce pourtour cylindrique.

Pour mouler et ensuite démouler une telle brosse, US-4,422,986 décrit un procédé de moulage dans lequel chaque poil est obtenu par injection dans un creux formé entre deux noyaux distincts du moule. Ainsi pour démouler chacun de ces poils les noyaux respectifs sont déplacés selon un axe de déplacement parallèle à l'axe d'allongement principal du poil qu'ils ont permis de former. Dans le cas, où un même noyau coopère à la réalisation de deux poils au niveau de deux faces distinctes, alors le déplacement du noyau se fait le long d'un axe médian entre les axes d'allongement respectifs des deux poils ainsi moulés.

Or dans le cas d'une brosse comportant plusieurs poils chacun orientés selon un axe sécant relativement à celui des autres poils, alors comme il est enseigné du document FR-A-2,505,633, il est nécessaire de prévoir autant de mouvements différents pour les noyaux qui constituent ce type de moule. Les noyaux doivent alors être déplacés radialement les uns par rapport aux autres. Or à l'échelle industrielle il est difficile de prévoir un moule muni d'une pluralité de noyaux, tel que chacun de ces noyaux doit être déplacé selon un axe de déplacement différent.

Dans l'état de la technique, et comme il est décrit dans le document US-4,422,986, les noyaux sont donc déplacés simultanément selon un même axe de translation, les noyaux étant répartis en deux blocs tendant à s'écarter l'un de l'autre le long de cet axe de translation. Or comme il est indiqué dans ce document, il est nécessaire de prévoir un nettoyage du moule assez fréquent car de nombreux poils sont cassés au démoulage et y restent coincés. En effet, les poils qui s'étendent selon un axe d'allongement sécant à l'axe de déplacement des noyaux, subissent une contrainte en torsion, appliquée immédiatement à leur base. Or les poils étant généralement coniques, la base est la plus large et est donc de faible flexibilité. Ainsi les poils qui forment un angle important relativement à l'axe de déplacement des noyaux sont d'autant plus susceptibles de se casser.

On connaît par ailleurs du document FR-A-2,505,633, une brosse munie de poils injectés, se répartissant sur tout le pourtour cylindrique de la brosse, tel que les poils peuvent être munis d'une forme élargie au niveau de leur extrémité libre, à savoir au niveau de l'extrémité du poil la plus éloignée de la base de rattachement de ce poil au support.

Ainsi dans l'état de la technique, soit on réalise des brosses avec des poils qui rayonnent comme c'est le cas selon US-4,422,986, soit on réalise des brosses dont tous les poils s'étendent parallèlement entre eux et parallèlement à l'axe de déplacement des noyaux, comme c'est le cas selon US-4,860,775.

Or il existe un besoin d'une brosse simple, facile à réaliser, à moindre coût, et permettant de proposer des poils s'étendant radialement les uns par rapport aux autres. Aussi, est-ce un des objets de l'invention que de réaliser un applicateur de produit capillaire ne présentant pas les inconvénients des dispositifs discutés ci-avant.

L'invention a pour objet un dispositif pour l'application d'un produit, notamment un produit de coloration capillaire, comportant un support, et au moins deux poils distincts dépassant de ce support, le dispositif étant obtenu par injection, un premier poil s'étendant de manière sensiblement rectiligne le long d'un axe d'allongement principal, caractérisé en ce qu'un deuxième poil comporte au moins une portion basale s'étendant parallèlement à l'axe d'allongement principal alors qu'une portion terminale de ce deuxième poil s'étend le long d'un axe sécant avec ledit axe d'allongement principal.

Par poils, on entend tous types d'élément d'application pouvant être obtenus par injection comme cela est prévu dans l'invention. Les poils dépassant du support comportent ainsi une portion basale, adjacente au support, et une portion terminale adjacente à la portion basale, et formant une extrémité libre du poil relativement au support. Le premier poil est tel que la portion basale et la portion terminale s'allongent le long de l'axe d'allongement principal.

Avantageusement, le dispositif est obtenu de moulage en une seule pièce, dans un matériau thermoplastique, notamment un polypropylène ou un polyéthylène. Le fait de pouvoir utiliser ces techniques industrielles de moulage, permet la réalisation d'un applicateur à très faible coût de revient.

En particulier, la portion basale du deuxième poil a une longueur le long de l'axe d'allongement principal inférieure à un tiers, et est de préférence de l'ordre de 1/10^{ème} d'une longueur totale de ce deuxième poil, la longueur totale correspondant à la longueur cumulée de la longueur de la portion basale et de la longueur de la portion terminale, le long de leurs axes d'allongement respectifs. En particulier, la longueur de cette portion basale est inférieure à 3 millimètres, et de préférence de l'ordre de 0,5 millimètres. En particulier, cette longueur représente entre 2 et 20%, et de préférence entre 5 et 10%, de la longueur totale dudit deuxième poil.

En parallèle, le premier poil à une longueur comprise entre 3 et 25 millimètres le long de l'axe d'allongement principal, et de préférence de l'ordre de 5 millimètres.

Selon un mode de réalisation particulier, l'axe sécant forme un angle aigu avec l'axe d'allongement principal. Par exemple, cet angle aigu est de l'ordre de 30°, et est en variante compris entre 20° et 90°. En particulier, plus l'angle aigu est grand, plus la longueur de la portion basale sera importante relativement à la longueur totale dudit poil.

Selon un mode de réalisation préféré, le dispositif comporte un troisième poil orienté selon un axe oblique relativement à l'axe d'allongement principal, cet axe oblique formant un angle de l'ordre de 60° avec l'axe d'allongement principal. Dans le cas où le deuxième poil s'étendrait entre le premier poil et ce troisième poil, alors respectivement le deuxième poil forme un angle aigu d'environ 30° avec l'axe d'allongement principal alors que le troisième poil forme un angle aigu de l'ordre de 60° avec ce même axe d'allongement principal.

Le troisième poil comporte éventuellement une portion basale parallèle à l'axe d'allongement principal, si ce troisième poil n'est pas obtenu au niveau d'un plan de joint entre les deux blocs d'un moule dans lequel le dispositif peut être injecté. Dans cette éventualité, ce troisième poil peut aussi bien être adjacent au premier poil qu'au deuxième poil.

Dans le cas contraire où le troisième poil est obtenu au niveau d'un plan de joint entre les deux blocs du moule, ce troisième poil peut avoir n'importe quelle structure dans la mesure où celle ci lui est impliquée par la forme particulière du plan de joint entre ces deux blocs, même éventuellement ondulée.

En particulier, les poils comportent une section décroissante depuis leur base de rattachement au support jusqu'à leur extrémité libre. Notamment, dans le cas où le poil est conique, la section est sensiblement circulaire et le diamètre de cette section varie entre 0,6 et 0,4 millimètres.

Avantageusement le dispositif comporte au moins deux rangées de poils, les poils d'une première rangée étant tous définis dans un plan comportant l'axe d'allongement principal, et les poils d'une deuxième rangée comportant tous au moins une partie définie dans le plan comportant l'axe sécant. Par exemple ces deux plans sont définis de telle sorte qu'ils sont sécants en une ligne passant par le support, et de préférence de telle sorte que cette ligne s'étendent sensiblement parallèlement à un axe longitudinal du support.

En particulier, les poils d'une première rangée sont décalés, par exemple en quinconce, par rapport aux poils d'une deuxième rangée adjacente de poils. On obtient ainsi un meilleur brossage. Le décalage est par exemple de l'ordre de quelques dixièmes de millimètres, de telle sorte que le poil d'une rangée ne soit pas exactement en vis-à-vis du milieu d'un intervalle défini entre deux poils adjacents de l'autre rangée.

Selon un mode de réalisation préféré, le dispositif comporte un plan de symétrie comportant l'axe d'allongement principal du premier poil. Dans ce cas, le dispositif comporte au moins trois poils, le deuxième poil ayant un poil symétrique relativement au plan de symétrie. Dans le cas où le dispositif comporte un troisième poil, celui-ci également comporte un symétrique, et le dispositif comporte alors cinq poils. En particulier une brosse selon l'invention comporte cinq rangées de poils s'étendant chacune dans un plan comportant l'axe du poil dans lequel la rangée est définie.

En particulier, le support ne comporte des poils que d'un seul côté. En effet, il n'est pas nécessaire de mouler des poils sur tout le pourtour extérieur du support, dans la mesure où à l'utilisation, l'utilisatrice n'utilise qu'une section d'environ 120°, même lorsque le support est recouvert sur tout son pourtour. Cette disposition permet une application plus précise.

Pour plus de maniabilité, le support peut se prolonger par un manche pour former une brosse. Dans ce cas, le manche peut comporter une collerette annulaire, ou bourrelet, autour du manche pour faciliter sa manutention et en particulier sa légère rotation autour de l'axe du manche.

En particulier, le manche peut comporter une palette à une extrémité distale opposée à l'extrémité au niveau de laquelle sont définis les poils. Cette palette a une forme sensiblement plane, par exemple selon un plan orthogonal à l'axe d'allongement principal du premier poil. Cette palette peut être utilisée pour sélectionner les mèches avec une portion du manche non enduite de produit.

C'est un autre objet de l'invention que de réaliser un kit d'application d'un produit capillaire, incorporant un dispositif applicateur selon la présente invention. En particulier, un kit d'application d'un produit capillaire, notamment d'un produit de coloration capillaire, comporte :
a) un dispositif pour le conditionnement dudit produit ; et
b) un applicateur selon l'invention.

Le kit comporte de préférence au moins deux produits conditionnés séparément: à savoir, une poudre colorante ou décolorante et un liquide oxydant. Ces deux produits sont à mélanger avant l'application. Par exemple le mélange est réalisé dans un bol. Le mélange peut être ensuite prélevé au moyen du dispositif selon l'invention.

Les deux produits peuvent même être conditionnés dans des dispositifs mélangeurs, adaptés pour le mélange extemporané des différentes composantes qui les constituent (généralement, un colorant et un oxydant), dans un bol dans lequel on réalise manuellement le mélange, ou dans des récipients pressurisés.

Ainsi c'est également un objet de l'invention que de fournir un moule pour la fabrication par injection d'un dispositif comportant un support et au moins deux poils dépassant d'un même côté du support, tel qu'un premier poil comporte un axe d'allongement principal et en ce qu'un deuxième poil comporte au moins une portion basale s'étendant parallèlement à l'axe d'allongement principal alors qu'une portion terminale de ce deuxième poil s'étend le long d'un axe sécant avec ledit axe d'allongement principal,
- le moule comportant au moins deux blocs destinés à coopérer l'un avec l'autre pour définir un volume intérieur correspondant au dispositif à mouler,
- un premier bloc apte à mouler les poils étant mobile le long d'un axe de déplacement, pour permettre ensuite la libération du dispositif moulé, tel que cet axe de déplacement est parallèle à l'axe d'allongement principal du premier poil, et tel que le premier bloc comporte deux noyaux définissant entre eux un plan de joint passant par le deuxième poil, ces deux noyaux étant mobiles le long du même dit axe de déplacement, leur déplacement étant indépendant.

De préférence encore, le premier bloc comporte trois noyaux définissant entre eux un premier plan de joint au niveau du deuxième poil, et un deuxième plan de joint au niveau du premier poil, les noyaux étant mobiles le long du même dit axe de déplacement, leur déplacement étant indépendant. Cette disposition avantageuse permet de prévoir un plan de joint au niveau des extrémités de chaque indentation du volume intérieur destiné à mouler respectivement les poils. Ces plans de joint permettent l'évacuation d'éventuelles bulles d'air qui empêcheraient le remplissage optimal de ce volume intérieur. Ainsi les risques de moulage défectueux peuvent être réduits.

De préférence, le support est défini dans un plan de joint défini entre les deux blocs.

En particulier, le premier bloc et le deuxième bloc délimitent un espace en continuité avec le volume intérieur, au niveau de leur plan de joint, de manière à pouvoir former un troisième poil dépassant du support.

Avantageusement, le deuxième bloc est muni d'un moyen éjecteur, de manière à dégager le dispositif moulé lorsque le premier bloc a complètement libéré les poils du support.

Dans ce cas, le deuxième bloc est généralement fixe, seul le dispositif éjecteur étant mobile.

Avantageusement, le deuxième bloc comporte une contre dépouille pour retenir le support sur ce deuxième bloc lorsque le premier bloc est déplacé, notamment lorsqu'on écarte le premier bloc dans le but de dégager les poils de leur moule.

Dans la mesure où on veut un dispositif comportant un plan de symétrie, au plus simple, le moule comporte lui-même un plan de symétrie passant par l'axe d'allongement principal du volume intérieur à mouler.

Pour injecter la matière devant prendre la forme et occuper tout le volume intérieur défini par le moule, celui-ci comporte un point d'injection reliant l'extérieur du moule à ce volume intérieur.

En particulier, le moule est prévu de telle sorte que le côté du deuxième poil pour lequel un arc formé entre la portion basale et la portion terminale est maximal est aussi un côté adjacent au premier poil. En effet, dans la mesure où la portion terminale s'étend selon un axe sécant relativement à l'axe selon lequel la portion basale s'étend, les deux portions s'étendant dans un même plan, elles définissent d'un premier côté un premier arc d'ouverture angulaire supérieure à 180°, et d'un deuxième côté un deuxième arc d'ouverture angulaire complémentaire de ce premier arc qui est elle inférieure à 180°. Dans ce cas particulier, les côtés desdites portions formant le premier angle sont en regard du premier poil.

C'est encore un autre objet de l'invention que de prévoir un procédé de moulage par injection d'un dispositif d'application comportant au moins un support dont dépasse au moins deux poils, un premier poil comportant un axe d'allongement principal et un deuxième poil comportant au moins une portion basale s'étendant parallèlement à l'axe d'allongement principal alors qu'une portion terminale de ce deuxième poil s'étend le long d'un axe sécant avec ledit axe d'allongement principal
caractérisé en ce qu'il comporte les étapes suivantes:
- assemblage des blocs d'un moule selon l'invention de manière à délimiter le volume intérieur de la pièce à mouler,
- injection d'un matériau thermoplastique dans le volume intérieur du moule,
- solidification du matériau injecté dans le moule,
- déplacement d'un premier noyau du premier bloc du moule selon son axe de déplacement, ce premier noyau contribuant à la formation d'au moins un côté du deuxième poil pour lequel un arc formé entre la portion basale et la portion terminale est maximal,
- déplacement ultérieur et parallèle d'un deuxième noyau de ce premier bloc, ce déplacement ultérieur étant conjoint au déplacement du premier noyau pour obtenir la sortie des poils du premier bloc du moule, et
- éjection du dispositif moulé du moule.

Au cours du procédé de fabrication, le déplacement du premier noyau dégage initialement au moins un côté du deuxième poil, selon une longueur supérieure à une longueur de la portion basale.

De préférence, au cours de ce même procédé de fabrication, le déplacement du deuxième noyau est réalisé en maintenant un décalage entre les deux noyaux.

Alternativement, selon un mode de réalisation préféré d'un dispositif d'application selon l'invention, notamment pour l'application d'un produit cosmétique, en particulier d'un produit capillaire, le dispositif comporte :
i) un support ;
ii) une première rangée d'éléments d'application se projetant de manière sensiblement rectiligne sur une surface du support ; et
iii) une seconde rangée d'éléments d'application disposée d'un côté de la première rangée, au moins un des éléments d'application de la seconde rangée ayant une première portion adjacente au support, s'étendant parallèlement aux éléments d'application de la première rangée, et une seconde portion, adjacente à la première, et inclinée relativement à cette dernière de manière à s'éloigner des éléments d'application de la première rangée en direction d'une extrémité opposée à la première portion.

Avantageusement le dispositif comprend une troisième rangée d'éléments d'application disposée du côté de la première rangée opposée à la seconde, au moins un des éléments d'application de la troisième rangée ayant une première portion adjacente au support, s'étendant parallèlement aux éléments d'application de la première rangée, et une seconde portion, adjacente à la première, et inclinée relativement à cette dernière de manière à s'éloigner des éléments d'application de la première rangée en direction d'une extrémité opposée à la première portion.

De préférence un tel support est de forme allongée selon un axe, lesdites première, seconde, et le cas échéant, troisième rangées s'étendant parallèlement audit axe.

Toujours avantageusement, la première rangée s'étend dans un plan médian dudit support contenant ledit axe du support.

Par exemple, les seconde et troisième rangées peuvent être disposées de manière symétrique de part et d'autre de la première.

Avantageusement, le support est de forme bombée autour dudit axe, la première rangée ainsi que les secondes portions des deuxième et troisième rangées s'étendant dans une direction sensiblement radiale audit support. En variante, on peut prévoir que les rangées forment des spires autour de l'axe du support.

Selon une autre caractéristique avantageuse, une surface arrière du support, opposée à la surface sur laquelle se projettent les éléments d'application, présente sur au moins une partie de sa longueur une rainure, la rainure ayant une portion de plus grande largeur perpendiculairement à la première rangée et une portion de plus faible largeur, cette dernière étant à une distance du fond de la rainure supérieure à une distance entre ledit fond et la portion de plus grande largeur.

Préférentiellement, le support peut comporter une quatrième rangée située du côté de la seconde opposé à la première, et une cinquième rangée située du côté de la troisième opposé à la première, les éléments d'application des quatrième et cinquième rangées étant sensiblement rectilignes.

Par exemple, la première portion d'un élément d'application peut représenter 2 à 20 % et de préférence, 5 à 10 % de la longueur totale dudit élément d'application.

Selon une variante avantageuse, les éléments d'application des secondes, et/ou troisième rangées sont décalés axialement, notamment en quinconce, relativement à ceux de la première. Le décalage est par exemple de l'ordre de quelques dixièmes de millimètres, de telle sorte que les éléments d'application d'une rangée ne sont pas respectivement en vis-à-vis des milieux des intervalles respectifs définis entre deux éléments d'application adjacents de l'autre rangée.

L'invention sera mieux comprise à la lecture de la description qui suit et à l'examen des figures qui l'accompagnent. Celles ci ne sont présentées qu'à titre indicatif et nullement limitatif de l'invention. Les figures montrent :
- Figure 1 : une vue de profil d'un dispositif selon l'invention selon un premier mode de réalisation ;
- Figure 2 : une vue selon un plan de coupe du dispositif de la figure 1;
- Figure 3 : une vue de profil d'un dispositif selon l'invention selon un deuxième mode de réalisation préféré;
- Figure 4 : une vue selon un plan de coupe du dispositif de la figure 3;
- Figures 5a à 5f : une vue en coupe du moule selon l'invention à différentes étapes du procédé de fabrication d'un dispositif selon la Figure 1;
- Figures 6a à 6f : une vue en coupe d'un deuxième moule selon l'invention à différentes étapes du procédé de fabrication d'un dispositif selon la Figure 3 ;
- Figure 7 : une vue de profil d'un dispositif selon l'invention selon un troisième mode de réalisation ;
- Figure 8 : un agrandissement vu de dessus d'une première partie du dispositif de la Figure 7 ;
- Figure 9 : un agrandissement vu de dessus d'une deuxième partie du dispositif de la Figure 7.

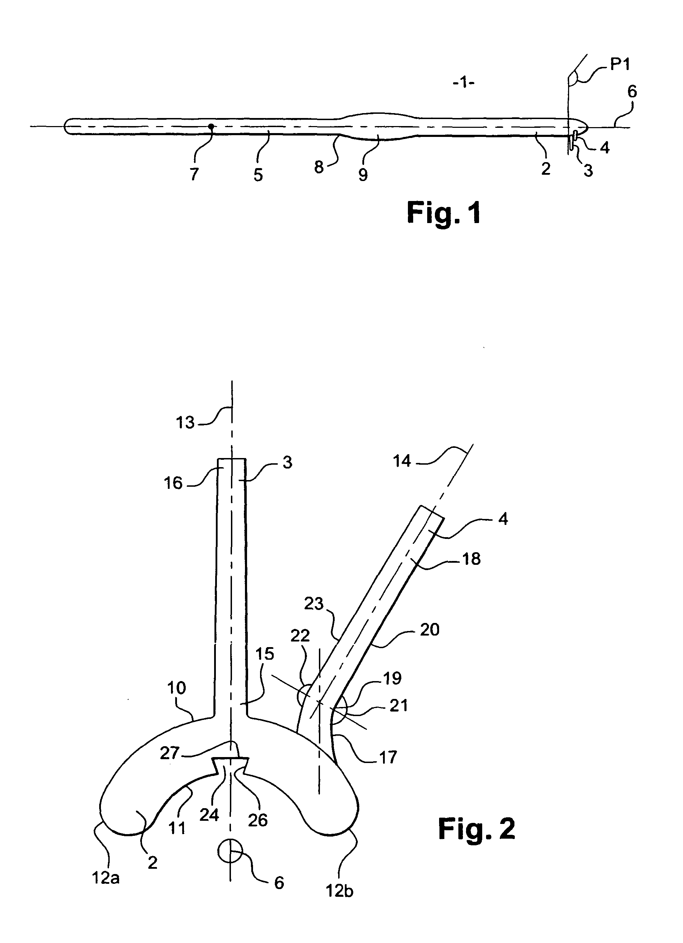

La figure 1 montre un dispositif pour l'application 1, également appelé applicateur 1 dans la suite de la description. Cet applicateur 1 comporte en particulier un support 2 sur lequel se dresse au moins deux poils 3 et 4. Le support 2 se prolonge par un manche 5. De préférence le dispositif 1 est obtenu de moulage en une seule pièce, le manche y compris, déjà profilé selon un axe de préhension 6 de ce manche 5. En particulier, on peut observer, du fait que le dispositif 1 est moulé d'une seule pièce, un point 7 au niveau duquel on observe une irrégularité de surface et correspondant au point d'injection du matériau thermoplastique dans le moule permettant d'obtenir ce dispositif 1. De préférence le point 7 est réalisé au niveau du manche 5.

De préférence, le support 2 est monté à une extrémité 8 du manche 5. En particulier, au niveau d'une zone de jonction 9, l'extrémité 8 du manche 5 est solidaire du support 2. De préférence les poils 3 et 4 sont disposés sur le support d'un côté opposé à celui au niveau duquel se rattache le support 2 à la zone de jonction 9.

Le manche 5 a par exemple une structure cylindrique s'allongeant le long de l'axe 6. Il a par exemple une longueur d'une dizaine de centimètres le long de cet axe 6. En variante, le manche 5 peut être de section carrée, ou de section régulière ou irrégulière. Le profil du manche 5 est notamment choisi de manière à permettre une meilleure ergonomie, en vue d'optimiser l'application. A cet effet, il peut comporter un bourrelet défini au niveau de son pourtour extérieur, et en particulier au niveau de la zone de jonction 9.

Les poils 3 et 4 sont implantés perpendiculairement au support 2, et en particulier orthogonalement à l'axe de préhension 6.

Selon une vue depuis un plan de coupe transversale P1 indiqué sur la figure 1, on observe Figure 2, que le support 2 a une section en forme de haricot. En effet, il présente une première surface convexe 10 opposée à une deuxième surface concave 11. Les surfaces convexes 10 et concaves 11 se rejoignent latéralement par des bords arrondis respectivement 12a et 12b. Les bords 12a et 12b, ainsi que les surfaces 10 et 11 sont sensiblement parallèles à l'axe 6 du manche 5.

En variante, non représentée, la première surface 10 et la deuxième surface 11 peuvent être convexes de telle sorte que le support 2 présente une section transversale de forme sensiblement ovoïde.

Les poils 3 et 4 sont uniquement dressés sur le pourtour extérieur de la face convexe 10. En particulier, le premier poil 3 se dresse perpendiculairement à cette surface convexe 10, en s'allongeant selon un axe d'allongement principal 13.

Le deuxième poil 4 comporte un deuxième axe d'allongement principal 14, appelé par la suite axe sécant 14. En effet, ce deuxième axe 14 est sécant avec l'axe d'allongement principal 13. Il forme, dans cet exemple représenté, un angle aigu de l'ordre de 30° avec l'axe d'allongement principal 13. La surface 10 étant convexe, le deuxième axe d'allongement 14 est de préférence également perpendiculaire à cette surface 10.

Le premier poil 3 est rectiligne et définit par exemple une forme conique à base 15 large, de diamètre extérieur d'environ 0,6 mm, au niveau de son point de rattachement sur le support 2. Le diamètre extérieur du premier poil 3 diminue au fur et a mesure qu'on s'éloigne du support 2 jusqu'à atteindre une section de diamètre de 0,4 mm au niveau de son extrémité libre 16. L'axe d'allongement principal 13 passe à la fois par la base 15 et l'extrémité libre 16. Le premier poil 3 a une longueur le long de cet axe 13 de l'ordre de 5 à 10 mm. En variante; les poils peuvent être de forme cylindrique, tronconique, pyramidale tronquée ou non. L'extrémité libre du poil est de préférence arrondie de manière à ne pas être blessante pour le cuir chevelu.

Le deuxième poil 4 n'est pas rectiligne. Il est différent du premier poil 3. En effet, il comporte une portion basale 17 s'étendant parallèlement à l'axe d'allongement principal 13 du premier poil 3 et une extrémité libre 18 s'allongeant selon le deuxième axe d'allongement 14, et telle que l'extrémité libre 18 forme un coude 19 avec la portion basale 17. Le deuxième poil 4 a une longueur essentiellement représentée par la longueur entre le coude 19 et l'extrémité libre 18. Dans ce cas, la longueur de la portion basale 17 relativement à l'axe d'allongement principal 13 est de l'ordre de 0,5 à 1 mm, tandis que la longueur entre le coude 19 et l'extrémité libre 18 relativement à l'axe sécant 14 est de l'ordre de 4 à 9,5 mm.

Au niveau de ce coude 19, le poil définit un premier côté 20 au niveau duquel l'angle 21 formé par le coude 19 est inférieur à un angle 22 d'un deuxième côté 23 de ce deuxième poil 4.

Selon le plan de coupe P1, qui est transversal au support 2 et donc orthogonal à l'axe du manche 6, les deux poils 3 et 4 ne se définissent pas dans un même plan transversal, comme cela est représenté Figure 2.

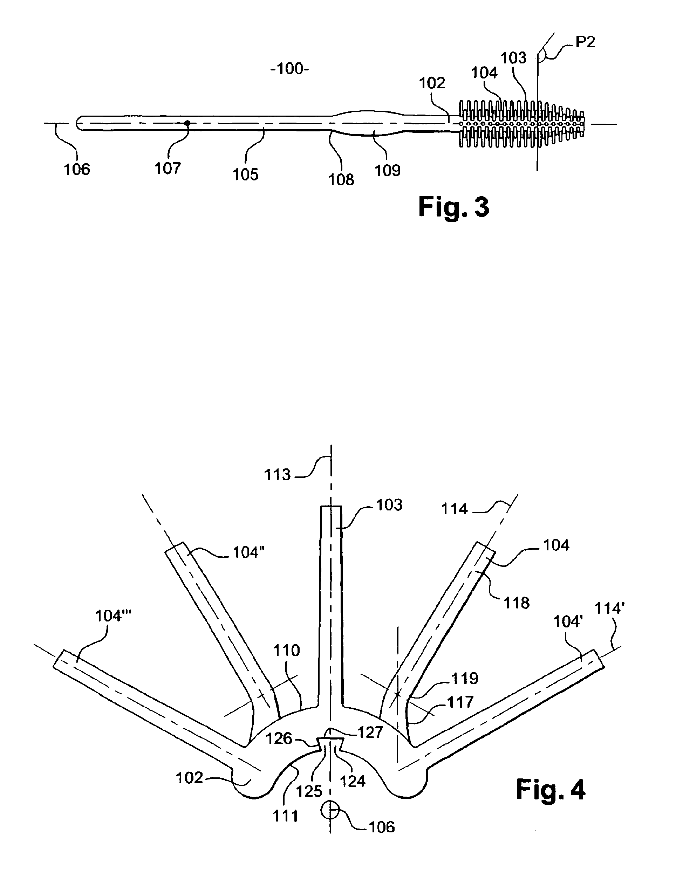

Selon un mode de réalisation préféré, Figure 3, le dispositif 100 correspond à celui de la figure 1, les mêmes moyens sont indexés de la même manière avec le préfixe de la centaine. De préférence, le support 102 comporte donc une pluralité de poils. Notamment cette pluralité de poils s'organise en au moins deux rangées 103 et 104. Ces rangées de poils sont parallèles à l'axe 6 du manche 5. Les extrémités libres des poils de chacune des rangées peuvent s'étendre radialement depuis le pourtour extérieur de la surface convexe 110. En fait chaque rangée de poil est définie dans un plan comportant les axes d'allongement principaux de chacun des poils qui constituent ladite rangée.

De préférence, les poils d'une même rangée sont tous réalisés à l'identique, excepté par exemple une possibilité de variation de leur longueur relativement à leur axe d'allongement principal respectif, le long de l'axe 6 du manche 5, la longueur d'un poil se déterminant en fonction de la distance entre sa base de rattachement au support et son extrémité libre.

En l'occurrence, selon un plan de coupe de dispositif 100 de la figure 3, on observe que le support est muni d'au moins un troisième poil 104 s'allongeant selon un axe d'allongement 114'. Ce troisième axe d'allongement 114' forme un angle aigu de l'ordre de 60° avec l'axe d'allongement principal 113. Par exemple ce troisième poil est disposé de tel sorte de que le deuxième poil 104 se définit selon une médiane de l'arc formé entre le premier poil 103 et ce troisième poil 104'.

Plus particulièrement, selon l'exemple représenté ce troisième poil est rectiligne et défini une forme conique entre sa base de rattachement au support et son extrémité libre. En effet, comme il sera indiqué par la suite, ce troisième poil 104' est obtenu au niveau d'un plan de joint entre deux blocs destinés à s'écarter l'un de l'autre dans des directions opposées. Dans ce cas, le troisième poil pourrait même avoir n'importe quelle forme autre que conique. Alternativement, si ce troisième poil n'est pas obtenu au niveau de ce plan de joint, alors la forme définie par ce troisième poil 104' serait proche de la structure du deuxième poil 104, à savoir en comportant une portion basale coudée relativement à une extrémité libre.

De préférence, le dispositif 100 comporte un plan de symétrie, ce plan comportant l'axe de préhension 106 et l'axe d'allongement principal 113. De ce fait, depuis la vue en coupe selon le plan P2, le support comporte donc au moins cinq poils distincts pouvant s'étendre sensiblement radialement depuis l'axe de préhension 106. Le deuxième poil 104 comporte alors un poil symétrique 104" correspondant à un quatrième poil dressé sur le support. Le support 102 étant dans ce cas présent muni d'un troisième poil 104', celui ci également comporte un poil symétrique 104"' correspondant à un cinquième poil dressé sur le support 102.

Ainsi le support 102 présente des poils d'un seul côté au niveau de sa surface convexe 110. En particulier, ces poils sont disposés de manière à définir une brosse dont les poils couvrent une ouverture angulaire de l'ordre de 120°.

Dans une variante représentée Figure 4, selon le plan de coupe P2, qui est transversal au support 102 et donc orthogonal à l'axe du manche 106, les poils 103', 104, 104', 104", et 104"' ne se définissent pas dans un même plan transversal, comme cela est représenté Figure 4. Dans cet exemple, le deuxième poil 104 et son symétrique le quatrième poil 104" sont défini dans un même plan qui est lui parallèle à un deuxième plan dans lequel s'étendent les poils 103, 104' et 104"'.

Dans l'exemple présenté Figure 3, le support comporte cinq rangées de poils, chaque rangée étant respectivement définie dans un plan comportant au moins une partie, et en particulier au moins la portion terminale, de l'un des cinq poils 103, 104, 104', 104" ou 104"' et par ailleurs l'axe de préhension 106. En variante, les rangées ne sont pas nécessairement rectilignes et peuvent former des courbes, elles se définissent alors selon des surfaces non planes.

Selon la variante représentée Figure 3, les poils d'une première rangée définie par la présence du premier poil 103 sont en quinconce par rapport aux poils d'une deuxième rangée définie par la présence du deuxième poil 104. D'ailleurs, les poils de cette deuxième rangée sont eux même en quinconce avec les poils d'une troisième rangée définie par la présence du troisième poil 104'. La répartition en quinconce se reportant à l'identique par le plan de symétrie.

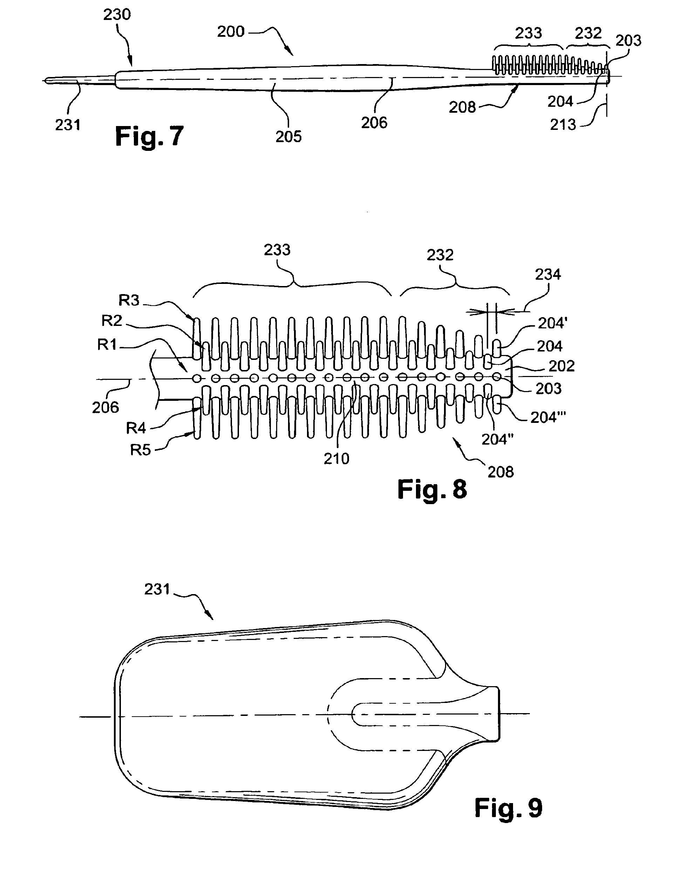

Une variante de réalisation d'un dispositif selon l'invention est présentée aux Figures 7 à 9. Selon cette variante, le dispositif 200 correspond à celui de la figure 3, les mêmes moyens étant indexés de la même manière avec le préfixe d'une centaine supplémentaire. Le dispositif 200 est monolithique. Il comporte à une première extrémité 208 le support 202 au niveau duquel sont présentés les poils, c'est-à-dire au moins le premier poil 203 et le deuxième poil 204. A l'opposé de cette première extrémité 208, relativement à l'axe de préhension 206, le manche 205 comporte une deuxième extrémité 230 comportant une palette 231 de forme sensiblement aplatie. La palette 231 comporte au moins une face sensiblement orthogonale à l'axe d'allongement principal 213 du premier poil 203.

Cette palette 231 a par exemple pour objet de permettre la sélection d'une mèche de cheveux parmi la chevelure avant d'utiliser l'extrémité 208 munie de poils et par exemple chargée d'un produit à appliquer sur ladite mèche de cheveux sélectionnée.
Le dispositif 200 comporte également cinq rangées de poils, pour chacune de ces rangées définies le long de l'axe 206, la longueur des poils est respectivement croissante sur une première portion 232, et ensuite la longueur des poils d'une deuxième portion 233 de ce même ensemble de cinq rangées est sensiblement identique.

Les poils 203, 204' et 204"' sont définis dans un même premier plan transversal relativement à l'axe 206, alors que les poils 204 et 204" sont définis dans un autre plan transversal et parallèle au premier plan. Une distance 234 entre ces deux plans est de l'ordre de quelques centièmes de millimètres.

Les poils 203, 204, 204', 204" et 204"' définissent respectivement par au moins une de leur portion, et de préférence par leur portion terminale, un des deux axes nécessaires pour la définition des plans dans lesquels chaque rangée R1, R2, R3, R4 et R5 est respectivement définie. Les plans de chacune de ces rangées sont de plus respectivement définis par un axe défini au niveau de la surface 210, et selon cet exemple sensiblement parallèle à l'axe 206. Par exemple un intervalle entre deux poils adjacent d'une même rangée est de l'ordre de 2 millimètres.

Pour obtenir un support 1 tel que précédemment décrit, on utilise un moule 50 comportant un premier bloc 51 et un deuxième bloc 52. Ces deux blocs 51 et 52 sont mobiles en translation le long d'un axe 60, tel que les deux blocs 51 et 52 sont aptes à se rapprocher jusqu'à venir en contact l'un avec l'autre, et à pouvoir également s'écarter l'un de l'autre. Lorsque les deux blocs 51 et 52 sont en contact l'un avec l'autre, ils définissent un volume intérieur 53 dont le pourtour défini le pourtour extérieur du dispositif 1 à mouler. Les deux blocs définissent tout autour de ce volume intérieur 53 un plan de joint 54.

En particulier, le premier bloc 51 sert à mouler les poils 3 et 4, et le plan de joint 54 passe par le support 2. Notamment le plan de joint coupe les bords arrondis 12a et 12b en leur milieu.

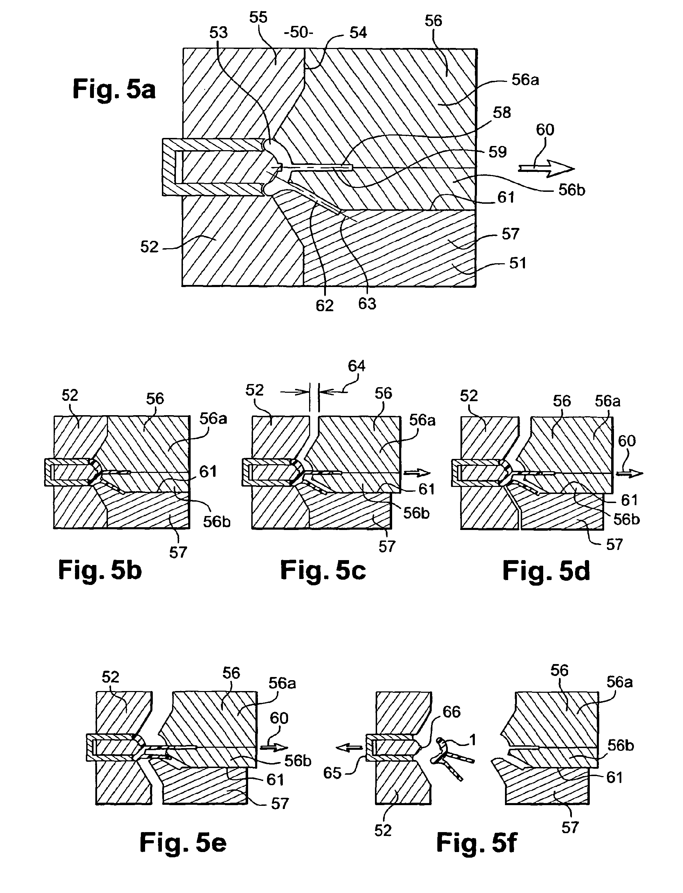

De préférence, pour mouler le dispositif 1, on rapproche les deux blocs 51 et 52 de manière à ce qu'ils viennent en contact jusqu'à assurer l'étanchéité du plan de joint 54, comme cela est représenté à la figure 5a. On maintient les blocs ainsi assemblés tout au long du moulage du dispositif 1.

Un matériau thermoplastique, par exemple du polypropylène ou du polyéthylène est injecté, Figure 5b, dans le volume intérieur 53 depuis un point d'injection du moule 50, non visible selon les vues en coupe de ce moule proposées sur les figures 5a à 5f. Le point d'injection relie un pourtour extérieur 55 du moule 50 au volume intérieur 53.

Avant d'entamer l'étape représentée à la figure 5c, on attend la solidification du matériau thermoplastique à l'intérieur du volume intérieur 53. Ce temps est par exemple déterminé en fonction des caractéristiques du matériau injecté et de résultats expérimentaux.

Le bloc 51 servant à mouler les poils comporte notamment deux noyaux respectivement 56 et 57.

Le premier noyau 56 participe à la formation d'une première partie du plan de joint 54, et comporte également au moins un creux 58 s'allongeant selon un axe 59 parallèle à l'axe de déplacement de ce premier noyau 56, l'axe de déplacement du premier noyau étant strictement parallèle à l'axe de déplacement 60 du premier bloc 51. Ce creux 58 va permettre notamment de former le premier poil 3, et l'axe d'allongement 59 du creux 58 correspond exactement à l'axe d'allongement principal 13 du futur poil 3 moulé. De préférence, ce premier noyau est lui-même divisé en deux noyaux 56a et 56b définissant entre eux un plan de joint débouchant au niveau de l'extrémité du creux 58. Ces deux noyaux sont de préférence toujours déplacés simultanément et dans la suite, on ne les distinguera pas spécifiquement en désignant le premier noyau 56.

Le deuxième noyau 57 participe à la formation d'une deuxième partie du plan de joint 54, complémentaire de la première partie. Il forme avec le premier noyau 56 un deuxième plan de joint 61. Ce deuxième plan de joint 61 permet la formation du deuxième poil 4. En effet, l'un du premier côté 20 ou du deuxième côté 23 est obtenu par une forme particulière donnée par le premier noyau 56 au niveau de ce deuxième plan de joint 61, alors que l'autre de ce premier côté 20 ou de ce deuxième côté 23 est obtenu de la forme particulière du deuxième noyau 57 au niveau de ce même plan de joint 61. Lorsque les deux noyaux sont accolés de manière étanche, le plan de joint 61 définit un creux 62 qui permettra le moulage ultérieur du deuxième poil 4.

Ce creux 62 s'allonge selon un axe 63 sécant avec l'axe 59 du premier creux 58. L'axe de déplacement du deuxième noyau 57 étant strictement parallèle à l'axe de déplacement 60 du premier bloc 51, le deuxième poil 4 sera démoulé en deux temps.

Comme il apparaît sur la Figure 5c, les deux noyaux 56 et 57 ne sont pas déplacés simultanément. En fait, le premier noyau qui est déplacé le long de l'axe 60 correspond au noyau qui présente la forme particulière, au niveau du deuxième plan de joint 61, de pouvoir former le deuxième côté 23, celui formant l'angle maximal au niveau du coude 19 relativement au premier côté 20.

En l'occurrence, selon les figures représentées, le deuxième poil 4 présente ce deuxième côté 23 en vis-à-vis du premier poil. Donc c'est le premier noyau 56 qui est déplacé le long de l'axe 60, comme cela est représenté Figure 5c. Il est déplacé d'une distance 64 relativement au deuxième bloc 52, telle que cette distance 64 est au moins supérieure à la longueur de la portion basale 17 du deuxième poil 4 encore en parti délimité par le deuxième noyau 57.

A la figure 5d, le démoulage des poils se poursuit. Notamment le deuxième noyau 57 est déplacé parallèlement à l'axe 60, d'une distance inférieure à la distance 64, de manière à ce que le poil 4 en partie libre d'un côté se décroche du deuxième noyau 57. Le déplacement du deuxième noyau implique une certaine flexibilité du deuxième poil 4 au niveau de son coude 19. En effet, le deuxième noyau 57, au cours de son déplacement, vient lécher le pourtour extérieur du premier côté 20 du poil 4. Le premier noyau 56 étant décalé par rapport au deuxième noyau 57, un espace libre est ménagé pour tolérer une légère flexion de ce poil 4.

De préférence le deuxième noyau 57 est déplacé le long de cet axe 60 en maintenant l'écart de positionnement avec le premier noyau 56. Ainsi se poursuit le démoulage des poils 3 et 4, Figure 5e, en écartant de plus en plus le premier bloc 51 du deuxième bloc 52. Lors de son démoulage, le deuxième poil 4 est soumis à une contrainte en flexion, notamment appliquée au niveau de son coude 19. Le coude 19 étant éloigné de la base de rattachement de ce poil 4 au support 2, il est donc apte à une certaine flexibilité, et ne se rompt pas au cours de son démoulage.

Une fois les poils complètement démoulés des deux noyaux, le support ayant été maintenu solidairement du deuxième moule 52 en est éjecté par le biais d'un éjecteur 65, se déplaçant relativement au deuxième bloc 52 parallèlement à l'axe 60. L'éjecteur 65 permet de dégager complètement le dispositif 1 de son moule 50.

En effet, le support 2 a pu être maintenu dans le deuxième bloc 52 au moyen d'une contre dépouille 24 coopérant avec une dépouille 66 du deuxième bloc 52. Les parois de la contre dépouille sont inclinées selon un angle s'opposant au démoulage. Plus particulièrement la contre dépouille 24 correspond à une rainure réalisée dans la surface convexe 11 du support 5. Cette rainure 24 comporte une ouverture 25 se définissant perpendiculairement à l'axe d'allongement principal 13. La rainure 24 comporte un fond 26 opposé à l'ouverture 25. Entre le fond 26 et l'ouverture 25, la rainure 24 comporte une paroi 27 orientée de telle sorte qu'une première section proche de l'ouverture 25 est plus faible qu'une deuxième section proche du fond 26. La paroi 27 est orientée de telle sorte qu'elle s'évase depuis l'ouverture 25 en direction du fond 26. Selon une vue en coupe passant par l'axe d'allongement principal 13, la section de la rainure 24 dans ce plan forme un trapèze.

Ce deuxième bloc 52 est d'ailleurs de préférence fixe relativement à la machine de moulage, et le point d'injection est par exemple prévu au niveau de cette partie fixe.

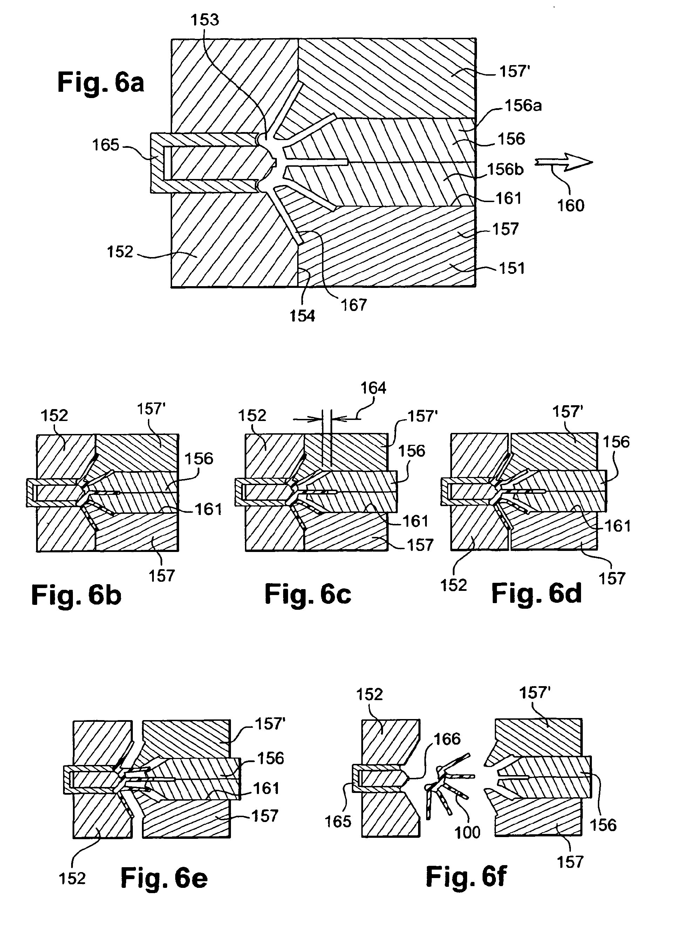

Pour réaliser un dispositif 100 du type de celui précédemment décrit, on utilise un moule 150 correspondant à celui du moule 50, les mêmes moyens étant indexés de la même manière avec le préfixe de la centaine. Le procédé de fabrication d'un dispositif 100 étant en particulier décrit sur les Figures 6a à 6f.

Notamment, pour la réalisation du troisième poil 104', au niveau du plan de joint 154, un creux 167 est prévu pour le former.

Dans la mesure où le dispositif 100 obtenu comporte un plan de symétrie alors le moule 150 comporte également un plan de symétrie. Notamment au niveau du premier bloc 151, celui ci comporte un premier noyau 156 entouré par un deuxième noyau 157 et un troisième noyau 157' symétrique du deuxième noyau. Selon un mode de réalisation, ce deuxième noyau 157 peut être solidaire en déplacement du troisième noyau 157'. Le premier noyau 156 peut lui-même être divisé en deux noyaux 156a et 156b tel qu'un plan de joint entre ces deux noyaux débouche au niveau de l'indentation du volume intérieur apte à mouler le premier poil 103 ou respectivement 203, et donc la première rangée de poils R1.

Le déplacement des noyaux les uns par rapport aux autres dans le but de démouler les poils qui sont notamment exclusivement prévus pour être formés par le premier bloc 151, est représenté par étape sur les figures 6a à 6f, et sont identiques à celles prévues par les étapes représentées sur les figures 5a à 5f.

## Revendications

1. Dispositif (1, 100, 200) pour l'application d'un produit, notamment un produit de coloration capillaire, comportant un support (2, 102, 202), et au moins deux poils (3, 4, 103, 104, 104', 104", 104"', 203, 204, 204', 204", 204"') distincts dépassant de ce support, le dispositif étant obtenu par injection, un premier poil (3, 103) s'étendant de manière sensiblement rectiligne le long d'un axe d'allongement principal (13, 113),
**caractérisé en ce qu'**un deuxième poil (4, 104, 204) comporte au moins une portion basale (17, 117) s'étendant parallèlement à l'axe d'allongement principal alors qu'une portion terminale (18, 118) de ce deuxième poil s'étend le long d'un axe sécant (14,114) avec ledit axe d'allongement principal.

2. Dispositif selon la revendication 1 **caractérisé en ce qu'**il est obtenu de moulage en une seule pièce, dans un matériau thermoplastique, notamment un polypropylène ou un polyéthylène.

3. Dispositif selon l'une des revendications 1 à 2 **caractérisé en ce que** la portion basale du deuxième poil a une longueur le long de l'axe d'allongement principal inférieure à 1/3, et de préférence de l'ordre de 1/10^{ème} d'une longueur totale de ce deuxième poil.

4. Dispositif selon l'une des revendications précédentes **caractérisé en ce que** le premier poil à une longueur comprise entre 3 et 25 mm le long de l'axe d'allongement principal.

5. Dispositif selon l'une des revendications précédentes **caractérisé en ce que** l'axe sécant forme un angle aigu, par exemple de l'ordre de 30°, avec l'axe d'allongement principal.

6. Dispositif selon l'une des revendications précédentes **caractérisé en ce qu'**il comporte un troisième poil (104') orienté selon un axe oblique (114') relativement à l'axe d'allongement principal, cet axe oblique formant notamment un angle de l'ordre de 60° avec l'axe d'allongement principal.

7. Dispositif selon l'une des revendications précédentes **caractérisé en ce que** les poils comportent une section décroissante depuis leur base de rattachement au support jusqu'à leur extrémité libre.

8. Dispositif selon l'une des revendications précédentes **caractérisé en ce que** les poils sont coniques et le diamètre de leur section décroît depuis leur base de rattachement au support jusqu'à leur extrémité libre, de préférence ce diamètre variant entre 0,6 et 0,4 mm.

9. Dispositif selon l'une des revendications précédentes **caractérisé en ce qu'**un côté (23) du deuxième poil, pour lequel un arc (22) formé entre la portion basale et la portion terminale est maximal, est adjacent au premier poil.

10. Dispositif selon l'une des revendications précédentes **caractérisé en ce qu'**il comporte au moins deux rangées de poils, les poils d'une première rangée étant tous définis dans un plan comportant l'axe d'allongement principal, et les poils d'une deuxième rangée comportant tous au moins une partie définie dans un plan comportant l'axe sécant.

11. Dispositif selon la revendication 10 **caractérisé en ce que** les poils d'une première rangée sont décalés par rapport aux poils d'une deuxième rangées de poils adjacente.

12. Dispositif selon l'une des revendications précédentes **caractérisé en ce que** le support est de forme allongée le long d'un axe (6, 106, 206), et **en ce que** des rangées de poils, définies dans le prolongement des premier et deuxième poils, s'étendent parallèlement audit axe.

13. Dispositif selon l'une des revendications précédentes **caractérisé en ce que** le dispositif comporte un plan de symétrie comportant l'axe d'allongement principal.

14. Dispositif selon l'une des revendications précédentes **caractérisé en ce que** le support comporte des poils d'un seul côté (10, 110, 210).

15. Dispositif selon l'une des revendications précédentes **caractérisé en ce que** le support a une forme de haricot selon une coupe transversale.

16. Dispositif selon l'une des revendications précédentes **caractérisé en ce que** sur une surface arrière (11, 111) du support opposée à la surface (10, 110, 210) sur laquelle se projettent les poils, le support forme sur au moins une partie de sa longueur une rainure (24, 124), la rainure ayant une portion de plus grande largeur perpendiculairement à l'axe d'allongement principal et une portion (25) de plus faible largeur, cette dernière étant à une distance du fond (26) de la rainure supérieure à une distance entre ledit fond et la portion de plus grande largeur.

17. Dispositif selon l'une des revendications précédentes **caractérisé en ce que** le support se prolonge par un manche (5, 105, 205) pour former une brosse.

18. Dispositif selon la revendication 17 **caractérisé en ce que** le manche comporte un bourrelet (9) autour du manche pour faciliter sa manutention et la rotation manuelle du manche.

19. Dispositif selon la revendication 17 ou 18 **caractérisé en ce que** le manche comporte une palette (231).

20. Dispositif selon la revendications 1 **caractérisé en ce qu'**il comporte au moins deux rangées de poils, les poils d'une première rangée étant tous définis dans un plan comportant l'axe d'allongement principal, et la seconde rangée étant disposée d'un côté de la première rangée, le deuxième poil appartenant à la seconde rangée de telle sorte que la portion terminale est inclinée (119) relativement à la portion basale de manière à s'éloigner des éléments d'application de la première rangée en direction d'une extrémité opposée à la portion basale.

21. Dispositif selon la revendication 20 **caractérisé en ce qu'**il comprend une troisième rangée de poils (104", 204") disposée du côté de la première rangée opposée à la seconde, au moins un des poils de la troisième rangée ayant une portion basale adjacente au support, s'étendant parallèlement aux poils de la première rangée, et une portion terminale, adjacente à la portion basale, et inclinée relativement à cette dernière de manière à s'éloigner des poils de la première rangée en direction d'une extrémité opposée à la portion basale.

22. Dispositif selon la revendication 20 **caractérisé en ce que** la première rangée s'étend dans un plan médian dudit support contenant ledit axe (106, 206).

23. Dispositif selon la revendication 20 **caractérisé en ce que** les seconde et troisième rangées sont disposées de manière symétrique de part et d'autre de la première.

24. Dispositif selon la revendication 23 **caractérisé en ce que** le support est de forme bombée autour dudit axe (106, 206), la première rangée ainsi que les portions basales des deuxième et troisième rangées s'étendant dans une direction sensiblement radiale audit support.

25. Dispositif selon la revendication 20 ou selon l'une quelconque de celles qui en dépendent **caractérisé en ce qu'**il comporte une quatrième rangée (104', 204') située du côté de la seconde opposé à la première, et une cinquième rangée (104"') située du côté de la troisième opposé à la première, les poils des quatrième et cinquième rangées étant sensiblement rectilignes.

26. Dispositif selon l'une quelconque des revendications 20 à 25 **caractérisé en ce que** la portion basale du deuxième poil représente 2 à 20 % et de préférence, 5 à 10 % de la longueur totale dudit poil.

27. Dispositif selon l'une quelconque des revendications 20 à 26 **caractérisé en ce que** les poils des seconde, et/ou troisième rangées sont décalés axialement, notamment en quinconce, relativement à ceux de la première.

28. Kit d'application d'un produit capillaire, notamment d'un produit de coloration capillaire, comprenant :
a) un dispositif pour le conditionnement dudit produit ; et
b) un dispositif applicateur selon l'une des revendications 1 à 19.

29. Moule (50, 150) pour la fabrication par injection d'un dispositif selon la revendication 1,
le moule comportant au moins deux blocs (51, 151, 52, 152) destinés à coopérer l'un avec l'autre pour définir un volume intérieur (53) correspondant au dispositif à mouler,
un premier bloc (51, 151) apte à mouler les poils étant mobile le long d'un axe de déplacement (60, 160), pour permettre ensuite la libération du dispositif moulé, tel que que cet axe de déplacement est parallèle à l'axe d'allongement principal du premier poil, **caractérisé en ce que** le premier bloc comporte deux noyaux (56, 156, 57, 157) définissant entre eux un plan de joint (61, 161) passant par le deuxième poil, ces deux noyaux étant mobiles le long du même dit axe de déplacement, leur déplacement étant indépendant.

30. Moule selon la revendication 29 **caractérisé en ce que** le premier bloc comporte trois noyaux (56a, 56b, 156, 156a, 156b, 57, 157) définissant entre eux un premier plan de joint (61, 161) au niveau du deuxième poil, et un deuxième plan de joint au niveau du premier poil, les noyaux étant mobiles le long du même dit axe de déplacement, leur déplacement étant indépendant.

31. Moule selon l'une des revendications 29 à 30 **caractérisé en ce que** le support est défini dans un plan de joint (54, 154) défini entre les deux blocs.

32. Moule selon l'une des revendications 29 à 31 **caractérisé en ce que** le premier bloc et le deuxième bloc délimitent un espace (167) en continuité avec le volume intérieur, au niveau de leur plan de joint (54, 154), de manière à pouvoir former un troisième poil (104', 204') dépassant du support.

33. Moule selon l'une des revendications 29 à 32 **caractérisé en ce que** le deuxième bloc (52, 152) est muni d'un moyen éjecteur (65, 165), de manière à dégager le dispositif moulé lorsque le premier bloc a complètement libéré les poils du support.

34. Moule selon l'une des revendications 29 à 33 **caractérisé en ce que** le deuxième bloc est fixe.

35. Moule selon l'une des revendications 29 à 34 **caractérisé en ce que** le deuxième bloc comporte une contre-dépouille (66, 166) pour retenir le support sur ce deuxième bloc lorsque le premier bloc est déplacé.

36. Moule selon l'une des revendications 29 à 35 **caractérisé en ce qu'**il comporte un plan de symétrie passant par l'axe d'allongement principal.

37. Moule selon l'une des revendications 29 à 36 **caractérisé en ce qu'**il comporte un point d'injection reliant l'extérieur du moule au volume intérieur.

38. Procédé de moulage par injection d'un dispositif (1, 100) d'application comportant au moins un support (2, 102, 202) dont dépasse au moins deux poils (3, 4, 103, 104, 104', 104", 104"', 203, 204, 204', 204", 204"'), un premier poil (3, 103, 103) comportant un axe d'allongement principal (13, 113, 213) et un deuxième poil (4, 104, 204) comportant au moins une portion basale (1, 117) s'étendant parallèlement à l'axe d'allongement principal alors qu'une portion terminale (18, 118) de ce deuxième poil s'étend le long d'un axe sécant (14, 114) avec ledit axe d'allongement principal
- **caractérisé en ce qu'**il comporte les étapes suivantes:
- assemblage des blocs d'un moule selon l'une des revendications 21 à 30 de manière à délimiter le volume intérieur de la pièce à mouler,
- injection d'un matériau thermoplastique dans le volume intérieur du moule,
- solidification du matériau injecté dans le moule,
- déplacement d'un premier noyau du premier bloc du moule selon son axe de déplacement, ce premier noyau contribuant à la formation d'au moins un côté du deuxième poil pour lequel un arc formé entre la portion basale et la portion terminale est maximal,
- déplacement ultérieur et parallèle d'un deuxième noyau de ce premier bloc, ce déplacement ultérieur étant conjoint au déplacement du premier noyau pour obtenir la sortie des poils du premier bloc du moule, et
- éjection du dispositif moulé du moule.

39. Procédé selon la revendication 38 **caractérisé en ce que** le déplacement du premier noyau dégage initialement au moins un côté du deuxième poil, selon une longueur supérieure à une longueur de la portion basale.

40. Procédé selon l'une des revendications 38 à 39 **caractérisé en ce que** le déplacement du deuxième noyau est réalisé en maintenant un décalage entre les deux noyaux.

## Claims

1. Device (1, 100, 200) for the application of a product, particularly a hair dyeing product, comprising a stem (2, 102, 202) and, projecting from this stem, at least two separate bristles (3, 4, 103, 104, 104', 104", 104''', 203, 204, 204' 204 " , 204'''), the device being produced by injection moulding, and a first bristle (3, 103) extending approximately linearly along a main axis of elongation (13, 113),
said device being **characterized in that** a second bristle (4, 104, 204) comprises at least one base portion (17, 117) extending parallel to the main axis of elongation, while an end portion (18, 118) of this second bristle extends along an axis (14, 114) that intersects said main axis of elongation.

2. Device according to Claim 1, **characterized in that** it is produced as a single moulding in a thermoplastic material such as a polypropylene or a polyethylene.

3. Device according to either of Claims 1 and 2, **characterized in that** the base portion of the second bristle has a length along the main axis of elongation of less than one third and preferably about one tenth of a total length of this second bristle.

4. Device according to one of the preceding claims, **characterized in that** the first bristle has a length of between 3 and 25 mm along the main axis of elongation.

5. Device according to one of the preceding claims, **characterized in that** the intersecting axis forms an acute angle, of for example about 30°, with the main axis of elongation.

6. Device according to one of the preceding claims, **characterized in that** it comprises a third bristle (104') oriented along an axis (114') extending obliquely relative to the main axis of elongation, this oblique axis forming in particular an angle of about 60° with the main axis of elongation.

7. Device according to one of the preceding claims, **characterized in that** the cross section of the bristles decreases from their stem-mounted base to their unattached end.

8. Device according to one of the preceding claims, **characterized in that** the bristles taper and the diameter of their cross section decreases from their stem-mounted base to their unattached end, this diameter preferably varying between 0.6 and 0.4 mm.

9. Device according to one of the preceding claims, **characterized in that** one side (23) of the second bristle, where an arc (22) formed between the base portion and the end portion is at its greatest, is adjacent to the first bristle.

10. Device according to one of the preceding claims, **characterized in that** it comprises at least two rows of bristles, the bristles of a first row all being defined in a plane containing the main axis of elongation, and the bristles of a second row all comprising at least one part defined in a plane containing the intersecting axis.

11. Device according to Claim 10, **characterized in that** the bristles of a first row are staggered relative to an adjacent second row of bristles.

12. Device according to one of the preceding claims, **characterized in that** the stem is of elongate form along an axis (6, 106, 206), and **in that** rows of bristles defined in the geometrical continuation of the first and second bristles extend parallel to said axis.

13. Device according to one of the preceding claims, **characterized in that** the device has a plane of symmetry containing the main axis of elongation.

14. Device according to one of the preceding claims, **characterized in that** the stem has bristles on one side (10, 110, 210) only.

15. Device according to one of the preceding claims, **characterized in that** the stem is bean-shaped in transverse section.

16. Device according to one of the preceding claims, **characterized in that**, on a rear surface (11, 111) of the stem opposite the surface (10, 110, 210) from which the bristles project, the stem forms, over at least part of its length, a groove (24, 124), the groove having a wider portion at right angles to the main axis of elongation and a narrower portion (25), the latter being at a greater distance from the bottom (26) of the groove than a distance from said bottom to the wider portion.

17. Device according to one of the preceding claims, **characterized in that** the stem is extended by a handle (5, 105, 205) to form a brush.

18. Device according to Claim 17, **characterized in that** the handle has an enlargement (9) around the handle to facilitate its manipulation and the manual rotation of the handle.

19. Device according to Claim 17 or 18, **characterized in that** the handle comprises a flattened portion (231).

20. Device according to Claim 1, **characterized in that** it comprises at least two rows of bristles, the bristles of a first row all being defined in a plane containing the main axis of elongation, and the second row being arranged on one side of the first row, the second bristle belonging to the second row in such a way that the end portion is inclined (119) relative to the base portion so as to diverge from the applicator elements of the first row towards an end remote from the base portion.

21. Device according to Claim 20, **characterized in that** it comprises a third row of bristles (104'', 204'') arranged on the opposite side of the first row from the second row, at least one of the bristles of the third row having a base portion adjacent to the stem, parallel to the bristles of the first row, and an end portion adjacent to the base portion and inclined relative to the latter so as to diverge from the bristles of the first row towards an end remote from the base portion.

22. Device according to Claim 20, **characterized in that** the first row extends in a central plane of said stem containing said axis (106, 206).

23. Device according to Claim 20, **characterized in that** the second and third rows are arranged symmetrically on either side of the first row.

24. Device according to Claim 23, **characterized in that** the stem is arched around said axis (106, 206), and the first row and the base portions of the second and third rows extend in an approximately radial direction to said stem.

25. Device according to Claim 20 or according to any one of its dependent claims, **characterized in that** it comprises a fourth row (104', 204') situated on the opposite side of the second row from the first row, and a fifth row (104''') situated on the opposite side of the third row from the first row, the bristles of the fourth and fifth rows being approximately straight.

26. Device according to any one of Claims 20 to 25, **characterized in that** the base portion of the second bristle represents from 2 to 20% and preferably from 5 to 10% of the total length of said bristle.

27. Device according to anyone of Claims 20 to 26, **characterized in that** the bristles of the second and/or third rows are staggered axially, especially in an equiangular zigzag, relative to the bristles of the first row.

28. Applicator kit for a hair product, especially a hair dyeing product, comprising:
a) a device for containing said product; and
b) an applicator device according to one of Claims 1 to 19.

29. Mould (50, 150) for producing by injection moulding a device according to Claim 1,
the mould comprising at least two blocks (51, 151, 52, 152) designed to fit together to define an internal volume (53) corresponding to the device to be moulded,
a first block (51, 151), which is suitable for moulding the bristles, being moveable along a movement axis (60, 160), to then allow the release of the moulded device, such that this movement axis is parallel to the main axis of elongation of the first bristle, said mould being **characterized in that** the first block comprises two cores (56, 156, 57, 157) which define between themselves a parting line (61, 161) passing through the second bristle, these two cores being moveable along the same said movement axis, and their movement being independent.

30. Mould according to Claim 29, **characterized in that** the first block comprises three cores (56a, 56b, 156, 156a, 156b, 57, 157) which define between themselves a first parting line (61, 161) on the second bristle, and a second parting line on the first bristle, the cores being moveable along the same said movement axis, and their movement being independent.

31. Mould according to either of Claims 29 and 30, **characterized in that** the stem is defined in a parting line (54, 154) defined between the two blocks.

32. Mould according to one of Claims 29 to 31, **characterized in that** the first block and the second block define a space (167) in continuity with the internal volume, at their parting line (54, 154), in such a way as to be able to form a third bristle (104', 204') projecting from the stem.

33. Mould according to one of Claims 29 to 32, **characterized in that** the second block (52, 152) is provided with an ejector means (65, 165) for expelling the moulded device when the first block has completely released the bristles of the stem.

34. Mould according to one of Claims 29 to 33, **characterized in that** the second block is fixed.

35. Mould according to one of Claims 29 to 34, **characterized in that** the second block has an undercut (66, 166) to keep the stem on this second block when the first block is moved.

36. Mould according to one of Claims 29 to 35, **characterized in that** it has a plane of symmetry passing through the main axis of elongation.

37. Mould according to one of Claims 29 to 36, **characterized in that** it comprises an injection point connecting the outside of the mould to the internal volume.

38. Method for the injection moulding of an applicator device (1, 100) having at least one stem (2, 102, 202) from which at least two bristles (3, 4, 103, 104, 104' , 104'', 104''', 203, 204, 204', 204'', 204''') project, a first bristle (3, 103, 203) having a main axis of elongation (13, 113, 213) and a second bristle (4, 104, 204) having at least one base portion (1, 117) extending parallel to the main axis of elongation, whereas an end portion (18, 118) of this second bristle extends along an axis (14, 114) intersecting said main axis of elongation,
- **characterized in that** it comprises the following steps:
- assembling the blocks of a mould according to one of Claims 21 to 30 in such a way as to define the internal volume of the part to be moulded,
- injecting a thermoplastic into the internal volume of the mould,
- solidifying the material injected into the mould,
- moving a first core belonging to the first block of the mould along its movement axis, this first core contributing to the formation of at least one side of the second bristle on which an arc formed between the base portion and the end portion is at its greatest,
- moving further, and parallel to this, a second core belonging to this first block, this further movement being linked to the movement of the first core to release the bristles from the first block of the mould, and
- ejecting the moulded device from the mould.

39. Method according to Claim 38, **characterized in that** the movement of the first core initially releases at least one side of the second bristle to a length greater than a length of the base portion.

40. Method according to either of Claims 38 and 39, **characterized in that** when the second core is moved, a staggered relationship is maintained between the two cores.

## Patentansprüche

1. Vorrichtung (1, 100, 200) zum Auftragen eines Produkts, insbesondere eines Produkts zur Haarfärbung, die einen Träger (2, 102, 202) und mindestens zwei verschiedene Borsten (3, 4, 103, 104, 104', 104", 104"', 203, 204, 204', 204", 204"'), die aus diesem Träger herausstehen, aufweist, wobei die Vorrichtung durch Spritzgießen erhalten ist und sich eine erste Borste (3, 103) im Wesentlichen geradlinig längs einer Hauptlängsachse (13, 113) erstreckt,
**dadurch gekennzeichnet, dass**
eine zweite Borste (4, 104, 204) mindestens einen Fußteil (17, 117) aufweist, der sich parallel zur Hauptlängsachse erstreckt, während sich ein Endteil (18, 118) der zweiten Borste längs einer schneidenden Achse (14, 114) erstreckt, welche die Hauptlängsachse schneidet.

2. Vorrichtung nach Anspruch 1, **dadurch gekennzeichnet, dass** sie durch Gießformen einstückig aus einem thermoplastischen Material hergestellt ist, insbesondere aus einem Polypropylen oder einem Polyethylen.

3. Vorrichtung nach Anspruch 1 oder 2, **dadurch gekennzeichnet, dass** der Fußteil der zweiten Borste eine Länge längs der Hauptachse aufweist, die kleiner ist als 1/3 einer Gesamtlänge dieser zweiten Borste und vorzugsweise etwa 1/10 davon beträgt.

4. Vorrichtung nach einem der vorhergehenden Ansprüche, **dadurch gekennzeichnet, dass** die erste Borste eine Länge von 3 bis 25 mm längs der Hauptlängsachse aufweist.

5. Vorrichtung nach einem der vorhergehenden Ansprüche, **dadurch gekennzeichnet, dass** die schneidende Achse einen spitzen Winkel, zum Beispiel von etwa 30°, mit der Hauptlängsachse bildet.

6. Vorrichtung nach einem der vorhergehenden Ansprüche, **dadurch gekennzeichnet, dass** sie eine dritte Borste (104') aufweist, die gemäß einer schrägen Achse (114') relativ zur Hauptlängsachse orientiert ist, wobei diese schräge Achse insbesondere einen Winkel von etwa 60° mit der Hauptlängsachse bildet.

7. Vorrichtung nach einem der vorhergehenden Ansprüche, **dadurch gekennzeichnet, dass** die Borsten von ihrem Fuß, mit dem sie am Träger befestigt sind, bis zu ihrem freien Ende abnehmenden Querschnitt besitzen.

8. Vorrichtung nach einem der vorhergehenden Ansprüche, **dadurch gekennzeichnet, dass** die Borsten konisch sind und der Durchmesser ihres Querschnitts von ihrem Fuß, mit dem sie am Träger befestigt sind, bis zu ihrem freien Ende abnimmt, wobei dieser Durchmesser vorzugsweise zwischen 0,6 und 0,4 mm variiert.

9. Vorrichtung nach einem der vorhergehenden Ansprüche, **dadurch gekennzeichnet, dass** eine Seite (23) der zweiten Borste, auf der ein zwischen dem Fußteil und dem Endteil gebildeter Bogen (22) maximal ist, an die erste Borste angrenzt.

10. Vorrichtung nach einem der vorhergehenden Ansprüche, **dadurch gekennzeichnet, dass** sie mindestens zwei Reihen von Borsten aufweist, wobei die Borsten einer ersten Reihe alle in einer Ebene vorgegeben sind, in der die Hauptlängsachse liegt, und die Borsten einer zweiten Reihe alle mindestens einen Teil aufweisen, der in einer Ebene vorgegeben ist, in der die schneidende Achse liegt.

11. Vorrichtung nach Anspruch 10, **dadurch gekennzeichnet, dass** die Borsten der ersten Reihe in Bezug auf die Borsten einer benachbarten zweiten Reihe von Borsten versetzt angeordnet sind.

12. Vorrichtung nach einem der vorhergehenden Ansprüche, **dadurch gekennzeichnet, dass** der Träger längs einer Achse (6, 106, 206) von länglicher Form ist und dass sich Reihen von Borsten, die in der Verlängerung der ersten und der zweiten Borsten vorgegeben sind, parallel zu dieser Achse erstrecken.

13. Vorrichtung nach einem der vorhergehenden Ansprüche, **dadurch gekennzeichnet, dass** sie eine Symmetrieebene aufweist, in der die Hauptlängsachse liegt.

14. Vorrichtung nach einem der vorhergehenden Ansprüche, **dadurch gekennzeichnet, dass** der Träger nur auf einer Seite (10, 110, 210) Borsten aufweist.

15. Vorrichtung nach einem der vorhergehenden Ansprüche, **dadurch gekennzeichnet, dass** der Träger im Querschnitt bohnenförmig ausgebildet ist.

16. Vorrichtung nach einem der vorhergehenden Ansprüche, **dadurch gekennzeichnet, dass** auf einer rückseitigen Fläche (11, 111) des Träger, die der Fläche (10, 110, 210) gegenüberliegt, aus der die Borsten herausragen, der Träger auf mindestens einem Teil seiner Länge eine Nut (24, 124) bildet, wobei die Nut einen Teil größerer Breite senkrecht zur Hauptlängsachse und einen Teil (25) kleinerer Breite aufweist, wobei sich letzterer in einem Abstand vom Boden (26) der Nut befindet, der größer ist als ein Abstand zwischen dem Boden und dem Teil größerer Breite.

17. Vorrichtung nach einem der vorhergehenden Ansprüche, **dadurch gekennzeichnet, dass** sich der Träger in einen Griff (5, 105, 205) verlängert, wodurch eine Bürste gebildet wird.

18. Vorrichtung nach Anspruch 17, **dadurch gekennzeichnet, dass** der Griff einen um den Griff herum verlaufenden Wulst (9) aufweist, um die Handhabung und das Drehen des Griffs in der Hand zu erleichtern.

19. Vorrichtung nach Anspruch 17 oder 18, **dadurch gekennzeichnet, dass** der Griff einen Spatel (231) aufweist.

20. Vorrichtung nach Anspruch 1, **dadurch gekennzeichnet, dass** sie mindestens zwei Reihen von Borsten aufweist, wobei die Borsten einer ersten Reihe alle in einer Ebene vorgegeben sind, in der die Hauptlängsachse liegt, und die zweite Reihe auf einer Seite der ersten Reihe angeordnet ist und die zweite Borste zur zweiten Reihe gehört, wobei die Anordnung so ist, dass der Endteil relativ zum Fußteil so geneigt ist (119), dass er sich in Richtung eines Endes, das entgegengesetzt zum Fußteil liegt, von den Applikationselementen der ersten Reihe entfernt.

21. Vorrichtung nach Anspruch 20, **dadurch gekennzeichnet, dass** sie eine dritte Reihe von Borsten (104", 204") aufweist, die auf der Seite der ersten Reihe angeordnet ist, die der zweiten Reihe gegenüberliegt, wobei mindestens eine der Borsten der dritten Reihe einen Fußteil, der an den Träger angrenzt und sich parallel zu den Borsten der ersten Reihe erstreckt, und einen Endteil aufweist, der sich am Fußteil anschließt, wobei die Anordnung so ist, dass sich der Endteil in Richtung eines Endes, das entgegengesetzt zum Fußteil liegt, von den Borsten der ersten Reihe entfernt.

22. Vorrichtung nach Anspruch 20, **dadurch gekennzeichnet, dass** sich die erste Reihe in einer Medianebene des Trägers erstreckt, in der die Achse (106, 206) liegt.

23. Vorrichtung nach Anspruch 20, **dadurch gekennzeichnet, dass** die zweite Reihe und die dritte Reihe symmetrisch zu beiden Seiten der ersten Reihe angeordnet sind.

24. Vorrichtung nach Anspruch 23, **dadurch gekennzeichnet, dass** der Träger um die Achse (106, 206) herum bauchig ausgebildet ist, wobei sich die erste Reihe sowie die Fußteile der zweiten und der dritten Reihe in eine Richtung erstrecken, die im Wesentlichen eine Radialrichtung zum Träger ist.

25. Vorrichtung nach Anspruch 20 oder einem der davon abhängigen Ansprüche, **dadurch gekennzeichnet, dass** sie eine vierte Reihe (104', 204'), die sich auf der Seite der zweiten Reihe befindet, die der ersten Reihe gegenüberliegt, sowie eine fünfte Reihe (104"') aufweist, die sich auf der Seite der dritten Reihe befindet, die der ersten Reihe gegenüberliegt, wobei die Borsten der vierten und der fünften Reihe im Wesentlichen geradlinig ausgebildet sind.

26. Vorrichtung nach einem der Ansprüche 20 bis 25, **dadurch gekennzeichnet, dass** der Fußteil der zweiten Borste 2 bis 20 % und vorzugsweise 5 bis 10 % der Gesamtlänge der Borste darstellt.

27. Vorrichtung nach einem der Ansprüche 20 bis 26, **dadurch gekennzeichnet, dass** die Borsten der zweiten Reihe und/oder der dritten Reihe relativ zu den Borsten der ersten Reihe axial versetzt sind, insbesondere in Zickzackanordnung.

28. Applikations-Kit für ein Produkt für die Haare, insbesondere ein Produkt zur Haarfärbung, der aufweist:
a) eine Vorrichtung zur Verpackung des Produkts und
b) eine Auftragvorrichtung nach einem der Ansprüche 1 bis 19.

29. Form (50, 150) zur Herstellung einer Vorrichtung nach Anspruch 1 durch Spritzgießen,
wobei die Form mindestens zwei Blöcke (51, 151, 52, 152) aufweist, die so miteinander zusammenwirken, dass sie ein Innenvolumen (53) vorgeben, das der auszuformenden Vorrichtung entspricht,
wobei ein erster Block (51, 151) so ausgebildet ist, dass die Borsten ausgeformt werden können, und längs einer Verschiebungsachse (60, 160) bewegbar ist, um die ausgeformte Vorrichtung dann freizugeben, wobei die Anordnung so ist, dass diese Verschiebungsachse parallel zur Hauptlängsachse der ersten Borste ist,
**dadurch gekennzeichnet, dass**
der erste Block zwei Kerne (56, 156, 57, 157) aufweist, die zwischen sich eine Dichtebene (61, 161) vorgeben, die durch die zweite Borste verläuft, wobei diese beiden Kerne längs derselben genannten Verschiebungsachse bewegbar sind und ihre Verschiebung unabhängig ist.

30. Form nach Anspruch 29, **dadurch gekennzeichnet, dass** der erste Block drei Kerne (56a, 56b, 156, 156a, 156b, 57, 157) aufweist, die zwischen sich eine erste Dichtebene (61, 161) auf Höhe der zweiten Borste und eine zweite Dichtebene auf Höhe der ersten Borste vorgeben, wobei die Kerne längs derselben genannten Verschiebungsachse bewegbar sind und ihre Verschiebung unabhängig ist.

31. Form nach Anspruch 29 oder 30, **dadurch gekennzeichnet, dass** der Träger in einer Dichtebene (54, 154) vorgegeben ist, die zwischen den beiden Blöcken vorgegeben ist.

32. Form nach einem der Ansprüche 29 bis 31, **dadurch gekennzeichnet, dass** der erste Block und der zweite Block auf Höhe ihrer Dichtebene (54, 154) einen Raum (167), der mit dem Innenvolumen in Verbindung steht, begrenzen, wobei die Anordnung so ist, dass eine dritte Borste (104', 204'), die vom Träger ausgeht, ausgeformt werden kann.

33. Form nach einem der Ansprüche 29 bis 32, **dadurch gekennzeichnet, dass** der zweite Block (52, 152) mit einem Auswerfer (65, 165) versehen ist, der so ausgebildet ist, dass die ausgeformte Vorrichtung ausgeworfen werden kann, wenn der erste Block die Borsten des Trägers vollständig freigegeben hat.

34. Form nach einem der Ansprüche 29 bis 33, **dadurch gekennzeichnet, dass** der zweite Block fest ist.

35. Form nach einem der Ansprüche 29 bis 34, **dadurch gekennzeichnet, dass** der zweite Block eine Hinterschneidung (66, 166) aufweist, um den Träger auf diesem zweiten Block zu halten, wenn der erste Block verschoben wird.

36. Form nach einem der Ansprüche 29 bis 35, **dadurch gekennzeichnet, dass** sie eine Symmetrieebene aufweist, die durch die Hauptlängsachse hindurchgeht.

37. Form nach einem der Ansprüche 29 bis 36, **dadurch gekennzeichnet, dass** sie einen Einspritzpunkt aufweist, der das Äußere der Form mit dem Innenvolumen verbindet.

38. Verfahren zum Spritzgießen einer Auftragvorrichtung (1, 100), die mindestens einen Träger (2, 102, 202) aufweist, von dem mindestens zwei Borsten (3, 4, 103, 104, 104', 104", 104"', 203, 204, 204', 204", 204"') ausgehen, wobei eine erste Borste (3, 103, 203) eine Hauptlängsachse (13, 113, 213) aufweist und eine zweite Borste (4, 104, 204) mindestens einen Fußteil (17, 117) aufweist, der sich parallel zur Hauptlängsachse erstreckt, während sich ein Endteil (18, 118) dieser zweiten Borste längs einer schneidenden Achse (14, 114) erstreckt, welche die Hauptlängsachse schneidet,
**dadurch gekennzeichnet, dass** es folgende Stufen umfasst:
- Zusammenfügen der Blöcke einer Form nach einem der Ansprüche 21 bis 30 derart, dass das Innenvolumen des auszuformenden Teils begrenzt wird,
- Einspritzen eines thermoplastischen Materials in das Innenvolumen der Form,
- Verfestigen des in die Form eingespritzten Materials,
- Verschieben eines ersten Kerns des ersten Blocks der Form entlang seiner Verschiebungsachse, wobei dieser erste Kern zur Ausbildung zumindest einer Seite der zweiten Borste beiträgt, bei der ein zwischen dem Fußteil und dem Endteil gebildeter Bogen maximal ist,
- anschließendes paralleles Verschieben eines zweiten Kerns dieses ersten Blocks, wobei dieses anschließende Verschieben gemeinsam mit dem Verschieben des ersten Kerns erfolgt, um ein Austreten der Borsten aus dem ersten Block der Form zu erzielen,
und
- Auswerfen der ausgeformten Vorrichtung aus der Form.

39. Verfahren nach Anspruch 38, **dadurch gekennzeichnet, dass** das Verschieben des ersten Kerns anfänglich mindestens eine Seite der zweiten Borste längs einer Länge freigibt, die größer ist als eine Länge des Fußteils.

40. Verfahren nach Anspruch 38 oder 39, **dadurch gekennzeichnet, dass** das Verschieben des zweiten Kerns vorgenommen wird, indem ein Versatz zwischen den beiden Kernen beibehalten wird.
